# EUROPEAN PATENT SPECIFICATION

(11) **EP 2 116 700 B1**
(45) Date of publication and mention of the grant of the patent: **10.11.2010**
(21) Application number: 08425321.0
(22) Date of filing: 09.05.2008
(51) Int. Cl.: F01N 3/20, B01D 53/90

(54) **Injection method and device for injecting a reducing agent into an exhaust system of an internal combustion engine**
Einspritzverfahren und Vorrichtung zum Einspritzen eines Reduktionsmittels in ein Abgassystem in einem Verbrennungsmotor
Procédé d'injection et dispositif d'injection d'un agent réducteur dans un système d'échappement d'un moteur à combustion interne

(43) Date of publication of application: 11.11.2009
(73) Proprietor: Magneti Marelli S.p.A., Corbetta (MI) (IT)
(72) Inventor: Cominetti, Paolo, 40137 Bologna (IT); Osbat, Giovanni, 48025 Riolo Terme (IT)
(74) Representative: Bongiovanni, Simone

(56) References cited:
- EP-A- 1 656 986
- WO-A-00/21881
- DE-A1-102004 054 238

## Description

### TECHNICAL FIELD

The present invention relates to an injection method and device for injecting a reducing substance into an exhaust system of an internal combustion engine provided with exhaust gas post-treatment.

### BACKGROUND ART

Future international standards related to the limitation of polluting gas emissions produced by cars (the so-called "Euro5" and "Euro6" or "Tier2 Bin5" standards) will provide for a very low limit for NOₓ molecules which may be released into the atmosphere.

Respecting such limits is particularly critical, especially for Diesel engines; for this reason, it has been suggested to equip the exhaust system of a Diesel engine with a further SCR (Selective Catalytic Reduction) catalyzer for NOₓ adapted to convert NOₓ molecules (NO₂ or NO) into nitrogen (N₂), which is an inert gas, and water (H₂0). The reducing reaction of NOₓ molecules into nitrogen (N) is difficult to obtain without using an appropriate reducing agent, which has been generally identified in ammonia (NH₃). The reducing agent must be injected into the exhaust system upstream of the SCR catalyzer so as to be mixed with the exhaust gases before being introduced into the SCR catalyzer.

However, storing ammonia inside a car is not advisable due to evident safety reasons related to the fact that ammonia is toxic. Consequently, it has been proposed to store and inject an aqueous urea solution, because urea breaks down into ammonia by effect of the exhaust gas heat and also in part by catalytic effect.

For injecting the aqueous urea solution upstream of the SCR catalyzer, it has been proposed to use an electromagnetic injector entirely similar to the electromagnetic injectors currently used for injecting fuel into internal combustion engines. In this manner, it is possible to use existing components of proven efficacy and reliability and it is therefore not necessary to develop new components, with evident saving of both costs and time. Specifically, an injection device which comprises a tank containing the aqueous urea solution and a pump which draws from the tank to feed the pressurized aqueous urea solution to the electromagnetic injector by means of a feeding pipe, is used.

An aqueous urea solution freezes at a temperature (approximately -11°C) which can be reached by a vehicle parked outside in cold climates or in winter. In order to avoid damaging caused by the aqueous urea solution freezing inside the electromagnetic injectors and inside the feeding pipe, the future international standards will require the electromagnetic injector and feeding pipe to be emptied when the internal combustion engine is switched off.

In order to empty the electromagnetic injector and the feeding pipe upon switching off the internal combustion engine, it has been proposed to use a reversible pump which is actuated to draw back the aqueous urea solution inside the electrometric injector and the feeding pipe; such an operation requires the electromagnetic injector to be opened to aspirate air into the electromagnetic injector and the feeding pipe as the pump empties the electromagnetic injector and the feeding pipe. However, by operating in this manner, the air inside the exhaust pipe may be aspired into the electromagnetic injector and the feeding pipe, which air may be very hot on one hand and, on the other hand, may display a very high concentration of contaminating/fouling elements (e.g. course particulate); therefore, by operating in this manner, there is the risk of overheating the electromagnetic injector and the pump, and the risk of fouling the electromagnetic injector. Specifically, course particulate in the air aspirated by the exhaust pipe may rapidly obstruct the electromagnetic injector filter; furthermore, the very hot air from the exhaust could cause a rapid evaporation of the aqueous urea solution inside the electromagnetic injector and thus lead to the formation of crystalline deposits inside the electromagnetic injector. With this regard, it is worth noting that the decomposition of urea also determines the formation of isocyanic acid (HNCO), which could thicken and polymerize and thus settle on the internal walls of the electromagnetic injector forming solid crystalline fouling which is difficult to be removed.

DE102004054238A1 discloses a dosing system for an aqueous urea solution used for the aftertreatment of exhaust gases generated by combustion engines. The liquid is conveyed from a reservoir into an exhaust manifold through the dosing means in a normally operating conveying device; at least one area that is located between a dosing point and the reservoir and is impinged upon by the liquid can be emptied counter to a normal transport direction of the liquid.

EP1656986A1 discloses a device for dispensing a reducing agent from a storage tank into a reaction zone comprises a pump, a metering valve, an injection nozzle and a recycle pipe through which excess reducing agent can be returned from the metering valve to the tank and the pump can be vented.

### DISCLOSURE OF INVENTION

It is the object of the present invention to provide an injection method and device for injecting a reducing substance into an exhaust system of an internal combustion engine provided with exhaust gas post-treatment, which injection method and device are easy and cost-effective to be made, are free from the above-described drawbacks and, specifically, ensure to properly empty an injector and a feeding pipe when the internal combustion engine is switched off.

According to the present invention, an injection method and device for injecting a reducing substance into an exhaust system of an internal combustion engine provided with exhaust gas post-treatment are provided according to what is claimed in the appended claims.

### BRIEF DESCRIPTION OF THE DRAWING

The present invention will now be described with reference to the accompanying drawing, which illustrates a non-limitative embodiment thereof; specifically, the enclosed figure is a diagrammatic view of an exhaust system of an internal combustion engine provided with an injection device for injecting a reducing substance made in accordance with the present invention.

### PREFERRED EMBODIMENTS OF THE INVENTION

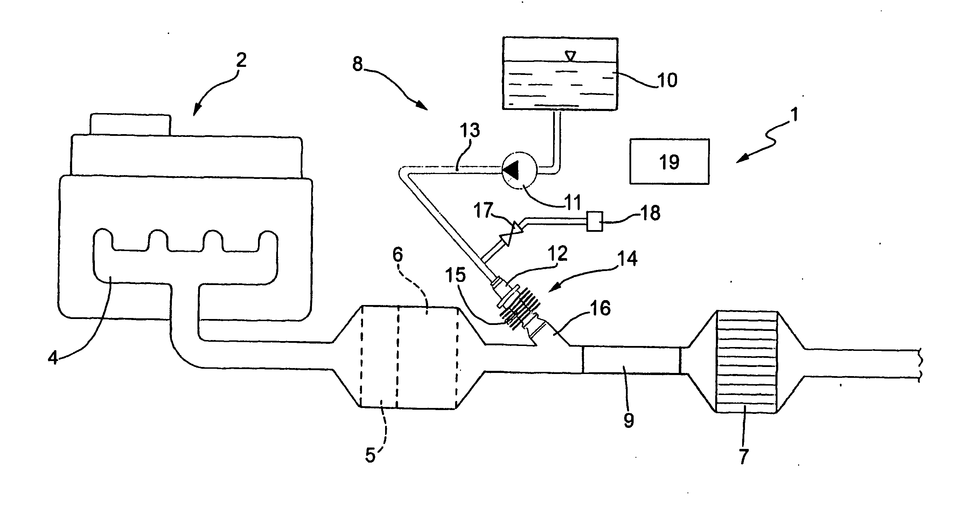

In figure 1, numeral 1 indicates as a whole an exhaust system of an internal combustion engine 2 operating according to the "Diesel" cycle (i.e. fed with diesel fuel or the like).

The exhaust system 1 discharges the gases produced by the combustion into the atmosphere and comprises an exhaust pipe 3 which originates from an exhaust manifold 4 of the internal combustion engine 2. An oxidizing catalyzer 5 and a particulate filter 6 are arranged along the exhaust pipe 3; in figure 1, the oxidizing catalyzer 5 and the particulate filter 6 are arranged one after the other within a same, common tubular container.

Furthermore, a SCR (Selective Catalytic Reduction) catalytic system 7 for the post-treatment of NOₓ molecules (NO and NO₂) is arranged along the exhaust pipe 3 and downstream of the oxidizing catalyser 5. The SCR catalytic system 7 may comprise a single SCR catalyser 7 as shown in figure 1, or may comprise a set (normally three) of catalyzers which jointly optimize the SCR function for the post-treatment of NOₓ molecules.

An injection device 8 is coupled to the exhaust pipe 3 immediately upstream of the catalytic system 7, which injection device 8 is adapted to inject a reducing additive, and specifically an aqueous urea solution (i.e. a solution of urea and water) into the exhaust pipe 3 . In use, by effect of the heat of the exhaust gases inside the exhaust pipe 3, the urea injected into the exhaust pipe 3 spontaneously breaks down into isocyanic acid (HNCO) and ammonia (NH₃), which ammonia acts as reducing agent inside the catalytic system 7 to promote the breakdown reaction of the NOₓ molecules into nitrogen (N₂) and water (H₂O).

A static mixer 9 is inserted along the exhaust pipe 3 and at the injection device 8, which mixer serves the function of generating turbulences in the exhaust gases inside the exhaust pipe 3 so as to prevent the localized thickening of the isocyanic acid (which is formed during the urea breakdown) and thus to prevent the polymerization of the isocyanic acid and so as to increase the efficiency of the catalytic system 7, by making the dispersion of ammonia more homogenous in the exhaust gases. In the embodiment shown in figure 1, the static mixer 9 is arranged downstream of the injection device 8; alternatively, the static mixer 9 could be arranged upstream of the injection device 8.

The injection device 8 comprises a tank 10 containing the aqueous urea solution and a pump 11 which draws from the tank 10 to feed the pressurized aqueous urea solution to an electromagnetic injector 12 through a feeding pipe 13. It is worth noting that the pump 11 is reversible, i.e. may be actuated in one direction to aspirate the aqueous urea solution from the tank 10 and feed the aqueous urea solution into the feeding pipe 13, and may be actuated in the opposite direction to aspirate the aqueous urea solution from the feeding pipe 13 and feed the aqueous urea solution into the tank 10.

The electromagnetic injector 12 is adapted to inject the atomized aqueous urea solution into the exhaust pipe 3 and is fixed to the exhaust pipe 3 by means of an assembling device 14 which comprises a tubular supporting body 15; the tubular supporting body 15 of the assembling device 14 is made of thermally conductive material (typically steel), accommodates the electromagnetic injector 12 therein, and at a lower end thereof is adapted to be coupled by the head to a connecting tube 16 which laterally and obliquely protrudes from the exhaust pipe 3. An embodiment of the tubular supporting body 15 is provided in patent application EP2008425206.3 incorporated herein for reference purposes.

It is worth noting that the electromagnetic injector 12 is mounted at an upper portion of the exhaust pipe 13 and is oriented downwards so that the injection nozzle of the electromagnetic injector 12 is arranged at the lowest point.

The injection device 8 further comprises a vent valve 17, which is arranged along the feeding pipe 13, preferably close to the electromagnetic injector 12 and is adapted to connect the feeding pipe 13 to an air intake 18 which communicates with the atmosphere and which may be provided with a mechanical filter. According to a different embodiment (not shown), the air intake 18 does not communicate with the atmosphere, but it communicates with the exhaust pipe 3 downstream of the SCR catalytic system (and, if present, downstream of the particulate filter or DPF); it is worth noting that downstream of the SCR catalytic system 7, the gas inside the exhaust pipe 3 are relatively clean and display a relatively low temperature.

Preferably, the vent valve 17 is a solenoid valve (i.e. provided with an remotely drivable electric actuator) and is movable between a closed position, in which the feeding pipe 13 is isolated from the air intake 18, and an open position, in which the feeding pipe 13 is connected to the air intake 18. Alternatively, the vent valve 17 could not comprise a remotely drivable electric actuator and, for example, could be based on two-metal or PTC technology. According to a preferred embodiment, the vent valve 17 is integrated in a hydraulic connector which is coupled to an upper end of the electromagnetic injector 12 for hydraulically connecting the electromagnetic injector 12 to the feeding pipe 13.

Finally, the injection device 8 comprises a control unit 19, which drives the pump 11, the electromagnetic injector 12 and the vent valve 17.

When the internal combustion engine 1 is on, the control unit 19 maintains the vent valve 17 permanently closed, drives the pump 11 for feeding the pressurized aqueous urea solution to the electromagnetic injector 12 and cyclically drives the electromagnetic injector 12 to inject the atomized aqueous urea solution into the exhaust pipe 3. When the internal combustion engine 1 is switched off, the control unit 19 drives the pump 11, the electromagnetic injector 12 and the vent valve 17 as described below to empty the electromagnetic injector 12 and the feeding pipe 13 of the aqueous urea solution.

When the internal combustion engine 1 is switched off, the control unit 19 actuates the pump 11 for aspirating the aqueous urea solution from the feeding pipe 13 and feeding the aqueous urea solution into the tank 10. Subsequently, the control unit 19 opens the vent valve 17 for putting the feeding pipe 13 into communication with the atmosphere; in this manner, air from the atmosphere is aspirated through the air intake 18 into the feeding pipe 13 as the pump 11 empties the feeding pipe 13 .

Preferably, the control unit 19 does not open the vent valve 17 at the same time or immediately after the pump 11 is actuated for aspirating the aqueous urea solution from the feeding pipe 13; specifically, before opening the vent valve 17, the control unit 19 waits for a predetermined time interval T1, fixed during the step of designing, so as to let the pump 11 reduce the residual pressure of the aqueous urea solution inside the feeding pipe 13. In other words, when the internal combustion engine 1 is on, the pump 11 maintains the aqueous urea solution pressurized inside the feeding pipe 13 and upon switching off the internal combustion engine 1, the aqueous urea solution inside the feeding pipe 13 displays a relatively high residual pressure; in these conditions, if the vent valve 17 is opened at the same time or nearly at the same time as the pump 11 to aspirate the aqueous urea solution from the feeding pipe 13, part of the pressurized aqueous urea solution inside the feeding pipe 13 will leak through the air intake 18. On the contrary, by waiting for an interval of time before opening the vent valve 17, the pump 11 is let reduce the residual pressure of the aqueous urea solution inside the feeding pipe 13; therefore, when the vent valve 17 is opened, the residual pressure of the aqueous urea solution inside the feeding pipe 13 is low (typically lower than the atmospheric pressure) and therefore no leakage of aqueous urea solution through the air intake 18 occurs.

Once the vent valve 17 has been opened, the control unit 19 waits for a predetermined time interval T2, fixed during the step of designing, to let the pump 11 completely empty the segment of the feeding pipe 13 between the vent valve 17 and the tank 10. Once the time interval T2 has been waited for, the control unit 19 switches the pump 11 off, leaving the vent valve 17 open, and then opens the electromagnetic injector 12; in these conditions, the aqueous urea solution inside the electromagnetic injector 12 and inside the segment of the feeding pipe 13 between the vent valve 17 and the electromagnetic injector 12 leaks by gravity through the nozzle of the electromagnetic injector 12. With this regard, it is worth noting that the electromagnetic injector 12 is mounted at an upper portion of the exhaust pipe 13 and is oriented downwards so that the injection nozzle of the electromagnetic injector 12 is arranged at the lowest point.

Once the electromagnetic injector 12 has been opened, the control unit 19 waits for a predetermined time interval T3, fixed during the step of designing, to let both the segment of the feeding pipe 13 between the vent valve 17 and the electromagnetic injector 12, and the electromagnetic injector 12 be emptied by gravity of the aqueous urea solution which flows towards the exhaust pipe 3 and which settles within the exhaust pipe 3 .

At the end of the time interval T3, the electromagnetic injector 12 and the feeding pipe 13 are completely emptied of the aqueous urea solution and the control unit 19 closes the electromagnetic injector 12 and the vent valve 17.

The above-described injection device 8 displays many advantages, because it is simple and cost-effective to be made, is particularly tough (and thus displays a long service life and a very low risk of breakage) and, above all, allows to empty the magnetic injector 12 and the feeding pipe 13 in a particularly effective, efficient and contraindication-free manner when the internal combustion engine 1 is switched off. Specifically, in virtue of the use of the vent valve 17, only air from the atmosphere is aspirated into the feeding pipe 13, therefore essentially at ambient temperature and free from high concentrations of contaminating/fouling elements. Furthermore, in virtue of the use of the vent valve 17, the electromagnetic injector 12 (which is the most delicate component of the injection device 8, potentially the most subject to obstructions or breakages) is only crossed by a flow of aqueous urea solution which is essentially at ambient temperature and absolutely free from contaminating/fouling elements.

## Claims

1. An injection method for injecting a reducing liquid additive into an exhaust system (1) of an internal combustion engine (2); the injection method comprising the steps of:
actuating, when the internal combustion engine (2) is started up, a reversible pump (11) for aspirating the reducing liquid additive from a tank (10) and feeding the pressurized, reducing liquid additive to an injector (12) through a feeding pipe (13);
cyclically opening the injector (12) to inject the reducing additive into the exhaust pipe (3), when the internal combustion engine (2) is started up; and
emptying the injector (12) and the feeding pipe (13), when the internal combustion engine (2) is switched off,;
the injection method is **characterized in that** the step of emptying the injector (12) and the feeding pipe (13) comprises the further steps of:
actuating the pump (11) for aspirating the aqueous urea solution from the feeding pipe (13) and feeding the aqueous urea solution into the tank (10);
opening a vent valve (17) arranged along the feeding pipe (13) upstream of the injector (12);
switching the pump (11) off, after a second time interval (T2), and opening the injector (12); and
closing the injector (12) and the vent valve (17), after a third time interval (T3).

2. An injection method according to claim 1, wherein the step of emptying the injector (12) and the feeding pipe (13) comprises the further step of waiting for a first time interval (T1) between actuating the pump (11) for aspirating the aqueous urea solution from the feeding pipe (13) and opening the vent valve (17).

3. An injection method according to claim 1 or 2, wherein the vent valve (17) is arranged along the feeding pipe (13) close to the electromagnetic injector (12).

4. An injection method according to claim 3, wherein the vent valve (17) is integrated in a hydraulic connector which is coupled to an upper end of the injector (12) to hydraulically connect the injector (12) to the feeding pipe (13).

5. An injection method according to any one of the claims from 1 to 4, wherein the vent valve (17) is adapted to connect the feeding pipe (13) to an air intake (18) which communicates with the atmosphere.

6. An injection method according to any one of the claims from 1 to 4, wherein the vent valve (17) is adapted to connect the feeding pipe (13) to the exhaust pipe (3) downstream of a SCR catalytic system (7).

7. An injection method according to any one of the claims from 1 to 6, wherein the injector (12) is mounted at an upper portion of the exhaust pipe (13) and is oriented downwards so that the injection nozzle of the electromagnetic injector (12) is arranged at the lowest point.

8. An injection device (8) for injecting a reducing liquid additive into an exhaust system (1) of an internal combustion engine (2); the injection device (8) comprises:
a tank (10) containing the reducing liquid additive;
a reversible pump (11) connected to the tank (10);
an injector (12) which is connected to the pump (11) by means of a feeding pipe (13) and is adapted to inject the reducing additive into the exhaust pipe (3); and
a vent valve (17) which is arranged along the feeding pipe (13) upstream of the injector (12);
the injection device (8) is **characterized in that** it comprises a control unit (19) which, when the internal combustion engine (2) is switched off:
actuates the pump (11) for aspirating the aqueous urea solution from the feeding pipe (13) and feeding the aqueous urea solution into the tank (10);
opens the vent valve (17);
switches the pump (11) off, after a second time interval (T2), and opens the injector (12); and
closes the injector (12) and the vent valve (17), after a third time interval (T3).

9. An injection device (8) according to claim 8, wherein the control unit (19) waits for a first time interval (T1) between actuating the pump (11) for aspirating the aqueous urea solution from the feeding pipe (13) and opening the vent valve (17).

10. An injection device (8) according to claim 8 or 9, wherein the vent valve (17) is arranged along the feeding pipe (13) close to the electromagnetic injector (12).

11. An injection device (8) according to claim 10, wherein the vent valve (17) is integrated in a hydraulic connector which is coupled to an upper end of the injector (12) to hydraulically connect the injector (12) to the feeding pipe (13).

12. An injection device (8) according to any one of the claims from 8 to 11, wherein the vent valve (17) is adapted to connect the feeding pipe (13) to an air intake (18) which communicates with the atmosphere.

13. An injection device (8) according to any one of the claims from 8 to 11, wherein the vent valve (17) is adapted to connect the feeding pipe (13) to the exhaust pipe (3) downstream of a SCR catalytic system (7).

14. An injection device (8) according to any one of the claims from 8 to 13, wherein the injector (12) is mounted at an upper portion of the exhaust pipe (3) and is oriented downwards so that the injection nozzle of the electromagnetic injector (12) is arranged at the lowest point.

## Patentansprüche

1. Einspritzverfahren zur Einspritzung eines flüssigen Reduktionsadditivs in ein Abgassystem (1) eines Verbrennungsmotors (2); wobei das Einspritzverfahren die Schritte umfasst von:
Betätigen einer reversiblen Pumpe (11) zum Ansaugen des flüssigen Reduktionsadditivs aus einem Tank (10) und Speisens eines Injektors (12) mit dem druckbeaufschlagten flüssigen Reduktionsadditiv durch eine Zuleitung (13) bei Anlassen des Verbrennungsmotors (2);
zyklisches Öffnen des Injektors (12) um das flüssige Reduktionsadditiv in die Abgasleitung (3) einzuspritzen, wenn der Verbrennungsmotor (2) angelassen wird; und
Entleerung des Injektors (12) und der Zuleitung (13) wenn der Verbrennungsmotor (2) ausgeschaltet wird;
wobei das Einspritzverfahren **dadurch gekennzeichnet ist, dass** der Schritt der Entleerung des Injektors (12) und der Zuleitung (13) die weiteren Schritte umfasst von:
Betätigung der Pumpe (11) zum Ansaugen der wässrigen Harnstofflösung aus der Zuleitung (13) und Speisens der wässrigen Harnstofflösung in den Tank (10);
Öffnen eines Entlüftungsventils (17), angeordnet entlang der Zuleitung (13) welches dem Injektor (12) vorgeschaltet ist;
Abschalten der Pumpe (11) nach einem zweiten Zeitintervall (T2) und Öffnen des Injektors (12); und
Schließen des Injektors (12) und des Entlüftungsventils (17) nach einem dritten Zeitintervall (T3).

2. Einspritzverfahren gemäß Anspruch 1, wobei der Schritt des Entleerens des Injektors (12) und der Zuleitung (13) den weiteren Schritt des Wartens eines ersten Zeitintervalls (T1) zwischen Betätigung der Pumpe (11) zum Ansaugen der wässrigen Harnstofflösung aus der Zuleitung (13) und dem Öffnen des Entlüftungsventils (17) umfasst.

3. Einspritzverfahren gemäß Anspruch 1 oder 2, wobei das Entlüftungsventil (17) entlang der Zuleitung (13) angeordnet ist, nahe dem elektromagnetischen Injektor (12).

4. Einspritzverfahren gemäß Anspruch 3, wobei das Entlüftungsventil (17) in einen fluidischen Verbinder integriert ist, der an ein oberes Ende des Injektors (12) gekoppelt ist, um den Injektor (12) mit der Zuleitung (13) fluidisch zu verbinden.

5. Einspritzverfahren gemäß einem der Ansprüche 1 bis 4, wobei das Entlüftungsventil (17) angepasst ist, um die Zuleitung (13) mit einem Lufteinlass (18), der mit der Atmosphäre kommuniziert, zu verbinden.

6. Einspritzverfahren gemäß einem der Ansprüche 1 bis 4, wobei das Entlüftungsventil (17) angepasst ist, die Zuleitung (13) mit der Abgasleitung (3), nachgeschaltet einem SCR katalytischen System (7), zu verbinden.

7. Einspritzverfahren gemäß einem der Ansprüche 1 bis 6, wobei der Injektor (12) an einem unteren Abschnitt der Abgasleitung (13) montiert und abwärts orientiert ist, so dass die Injektionsdüse des elektromagnetischen Injektors (12) am niedrigsten oder tiefsten Punkt angeordnet ist.

8. Einspritzvorrichtung (8) zur Einspritzung eines flüssigen Reduktionsadditivs in ein Abgassystem (1) eines Verbrennungsmotors (2); wobei die Einspritzvorrichtung (8) umfasst:
einen Tank (10) der das flüssige Reduktionsadditiv enthält;
eine reversible Pumpe (11) die mit dem Tank (10) verbunden ist;
einen Injektor (12) der mit der Pumpe (11) mittels einer Zuleitung (13) verbunden und angepasst ist, das flüssige Reduktionsadditiv in die Abgasleitung (3) einzuspritzen; und
ein Entlüftungsventil (17), welches entlang der Zuleitung (13), dem Injektor (12) vorgeschaltet, angeordnet ist;
wobei die Einspritzvorrichtung (8) **dadurch gekennzeichnet ist dass** sie eine Steuereinheit (19) enthält welche:
die Pumpe (11) betätigt um die wässrige Harnstofftösung aus der Zuleitung (13) anzusaugen und die wässrige Harnstofflösung in den Tank (10) zu speisen;
das Entlüftungsventil (17) öffnet;
die Pumpe (11) nach einem zweiten Zeitintervall (T2) ausschaltet und den Injektor (12) öffnet; und
den Injektor (12) und das Entlüftungsventil (17) nach einem dritten Zeitintervall (T3) schließt;
wenn der Verbrennungsmotor (2) ausgeschaltet wird.

9. Einspritzvorrichtung (8) gemäß Anspruch 8, wobei die Steuereinheit (19) für ein erstes Zeitintervall (T1) zwischen Betätigen der Pumpe (11) zum Ansaugen der wässrigen Harnstofflösung aus der Zuleitung (13) und Öffnen des Entlüftungsventils (17) wartet.

10. Einspritzvorrichtung (8) gemäß Anspruch 8 oder 9, wobei das Entlüftungsventil (17) entlang der Zuleitung (13) nahe dem elektromagnetischen Injektor (12) angeordnet ist.

11. Einspritzvorrichtung (8) gemäß Anspruch 10, wobei das Entlüftungsventil (17) in einen fluidischen Verbinder integriert ist, der an ein oberes Ende des Injektors (12) gekoppelt ist um den Injektor (12) hydraulisch mit der Zuleitung (13) zu verbinden.

12. Einspritzvorrichtung (8) gemäß einem der Ansprüche 8 bis 11, wobei das Entlüftungsventil (17) angepasst ist, die Zuleitung (13) mit einem Lufteinlass (18), welcher mit der Atmosphäre kommuniziert, zu verbinden.

13. Einspritzvorrichtung (8) gemäß einem der Ansprüche 8 bis 11, wobei das Entlüftungsventil (17) angepasst ist, um die Zuleitung (13) mit der Abgasleitung (3), einem SCR katalytischen System (7) nachgeschaltet, zu verbinden.

14. Einspritzvorrichtung (8) gemäß einem der Ansprüche 8 bis 13, wobei der Injektor (12) an einen oberen Abschnitt der Abgasleitung (3) montiert und abwärts orientiert ist, so dass die Injektionsdüse des elektromagnetischen Injektors (12) am niedrigsten oder tiefsten Punkt angeordnet ist.

## Revendications

1. Procédé d'injection pour injecter un additif réducteur liquide dans un système d'échappement (1) d'un moteur à combustion interne (2) ; le procédé d'injection comprenant les étapes consistant à :
actionner, quand le moteur à combustion interne (2) tourne, une pompe bidirectionnelle (11) pour aspirer l'additif réducteur liquide depuis un réservoir (10) et distribuer l'additif réducteur liquide pressurisé à un injecteur (12) par l'intermédiaire d'un tuyau d'alimentation (13) ;
ouvrir l'injecteur (12) cycliquement pour injecter l'additif réducteur dans le tuyau d'échappement (3), quand le moteur à combustion interne (2) tourne ; et
vider l'injecteur (12) et le tuyau d'alimentation (13) quand le moteur à combustion interne (2) est arrêté ;
le procédé d'injection étant **caractérisé en ce que** l'étape consistant à vider l'injecteur (12) et le tuyau d'alimentation (13) comprend en outre les étapes consistant à :
actionner la pompe (11) pour aspirer la solution aqueuse d'urée hors du tuyau d'alimentation (13) et acheminer la solution aqueuse d'urée dans le réservoir (10) ;
ouvrir une vanne d'aération (17) disposée le long du tuyau d'alimentation (13) en amont de l'injecteur (12) ;
arrêter la pompe (11) après l'écoulement d'un deuxième laps de temps (T2) et ouvrir l'injecteur (12) ; et
fermer l'injecteur (12) et la vanne d'aération (17) après l'écoulement d'un troisième laps de temps (T3).

2. Procédé d'injection selon la revendication 1, dans lequel l'étape consistant à vider l'injecteur (12) et le tuyau d'alimentation (13) comprend l'étape supplémentaire consistant à attendre pendant un premier laps de temps (T1) entre l'actionnement de la pompe (11) pour aspirer la solution aqueuse d'urée hors du tuyau d'alimentation (13) et l'ouverture de la vanne d'aération (17).

3. Procédé d'injection selon la revendication 1 ou 2, dans lequel la vanne d'aération (17) est disposée le long du tuyau d'alimentation (13) à proximité de l'injecteur électromagnétique (12).

4. Procédé d'injection selon la revendication 3, dans lequel la vanne d'aération (17) est intégrée dans un connecteur hydraulique qui est raccordé à une extrémité supérieure de l'injecteur (12) pour raccorder hydrauliquement l'injecteur (12) au tuyau d'alimentation (13).

5. Procédé d'injection selon l'une quelconque des revendications 1 à 4, dans lequel la vanne d'aération (17) est adaptée pour raccorder le tuyau d'alimentation (13) à un orifice d'admission d'air (18) qui communique avec l'air ambiant.

6. Procédé d'injection selon l'une quelconque des revendications 1 à 4, dans lequel la vanne d'aération (17) est adaptée pour raccorder le tuyau d'alimentation (13) au tuyau d'échappement (3) en aval d'un système SCR de réduction catalytique sélective (7).

7. Procédé d'injection selon l'une quelconque des revendications 1 à 6, dans lequel l'injecteur (12) est monté sur une partie supérieure du tuyau d'échappement (13) et est orienté vers le bas de sorte que la buse d'injection de l'injecteur électromagnétique (12) soit disposée au point le plus bas.

8. Dispositif d'injection (8) pour injecter un additif réducteur liquide dans un système d'échappement (1) d'un moteur à combustion interne (2), le dispositif d'injection (8) comprenant :
un réservoir (10) contenant l'additif réducteur liquide ;
une pompe bidirectionnelle (11) reliée au réservoir (10) ;
un injecteur (12) qui est raccordé à la pompe (11) au moyen d'un tuyau d'alimentation (13) et qui est adapté pour injecter l'additif réducteur dans le tuyau d'échappement (3) ; et
une vanne d'aération (17) qui est disposée le long du tuyau d'alimentation (13) en amont de l'injecteur (12) ;
le dispositif d'injection (8) étant **caractérisé en ce qu'**il comprend une unité de commande (19) qui, quand le moteur à combustion interne (2) est arrêté :
actionne la pompe (11) pour aspirer la solution aqueuse d'urée hors du tuyau d'alimentation (13) et acheminer la solution aqueuse d'urée dans le réservoir (10) ;
ouvre la vanne d'aération (17) ;
éteint la pompe (11), après l'écoulement d'un deuxième laps de temps (T2), et ouvre l'injecteur (12) ; et
ferme l'injecteur (12) et la vanne d'aération (17) après l'écoulement d'un troisième laps de temps (T3).

9. Dispositif d'injection (8) selon la revendication 8, dans lequel l'unité de commande (19) attend pendant un premier laps de temps (T1) entre l'actionnement de la pompe (11) pour aspirer la solution aqueuse d'urée hors du tuyau d'alimentation (13), et l'ouverture de la vanne d'aération (17).

10. Dispositif d'injection (8) selon la revendication 8 ou 9, dans lequel la vanne d'aération (17) est disposée le long du tuyau d'alimentation (13) à proximité de l'injecteur électromagnétique (12).

11. Dispositif d'injection (8) selon la revendication 10, dans lequel la vanne d'aération (17) est intégrée dans un connecteur hydraulique qui est raccordé à une extrémité supérieure de l'injecteur (12) pour raccorder hydrauliquement l'injecteur (12) au tuyau d'alimentation (13).

12. Dispositif d'injection (8) selon l'une quelconque des revendications 8 à 11, dans lequel la vanne d'aération (17) est adaptée pour raccorder le tuyau d'alimentation (13) à un orifice d'admission d'air (18) qui communique avec l'air ambiant.

13. Dispositif d'injection (8) selon l'une quelconque des revendications 8 à 11, dans lequel la vanne d'aération (17) est adaptée pour raccorder le tuyau d'alimentation (13) au tuyau d'échappement (3) en aval d'un système SCR de réduction catalytique sélective (7).

14. Dispositif d'injection (8) selon l'une quelconque des revendications 8 à 13, dans lequel l'injecteur (12) est monté sur une partie supérieure du tuyau d'échappement ( 3) et est orienté vers le bas de sorte que la buse d'injection de l'injecteur électromagnétique (12) soit disposée au point le plus bas.
